# EUROPÄISCHE PATENTANMELDUNG

(11) **EP 1 227 312 A1**
(43) Veröffentlichungstag der Anmeldung: **31.07.2002**
(21) Anmeldenummer: 02000929.6
(22) Anmeldetag: 16.01.2002
(51) Int. Cl.: G01N 21/27

(54) **Standardprobe zum Kalibrieren einer spektrometischen Analyseeinrichtung**

(30) Priorität: 25.01.2001 DE 10103174
(71) Anmelder: ThyssenKrupp Stahl AG, 47166 Duisburg (DE)
(72) Erfinder: Mittelstädt, Horst, Dr.rer.nat., 46535 Dinslaken (DE); Nazikkol, Cetin, Dr.rer.nat., 47169 Duisburg (DE); Müller, Gregor, 47198 Duisburg (DE)
(74) Vertreter: Cohausz & Florack

(57) **Zusammenfassung**

Bei der Untersuchung von Stahlproben auf Einschlüsse werden spektrometrische Analyseeinrichtungen eingesetzt, bei denen für die Kalibrierung Standardproben benötigt werden, deren qualitative und quantitative Zusammensetzung bekannt ist. Statt der Ermittlung der Zusammensetzung der Standardprobe nach klassischen Referenzverfahren schlägt die Erfindung eine Standardprobe vor, die aus einem durch heißisostatisches Pressen einer Mischung aus vorbekannten Metallpartikeln und vorbekannten nichtmetallischen Feststoffpartikeln hergestellten Probekörper erhalten wird.

## Beschreibung

Die Erfindung betrifft eine Standardprobe zum Kalibrieren einer spektrometrischen Analyseeinrichtung. Solche Analyseeinrichtungen dienen in der Praxis dazu, nichtmetallische Einschlüsse in Stahlproben hinsichtlich ihrer chemischen Zusammensetzung und Größe zu bestimmen.

Da zum Kalibrieren einer spektrometrischen Analyseeinrichtung für die Einschlüsse in Stählen geeignete Standardproben auf dem freien Markt nicht erhältlich sind, werden sie von Stahlherstellern selbst erstellt. Sie verwenden dafür in der Regel aus der eigenen Produktion stammende Stähle verschiedener Zusammensetzung, die bezüglich der Einschlüsse nach herkömmlichen Verfahren charakterisiert werden. Diese Standardproben enthalten regelmäßig eine produktionstechnisch bedingte Vielzahl von verschiedenen Einschlußtypen mit einer breiten Größenverteilung. Das führt bei der spektrometrischen Analyse an solchen Proben zur Überlagerung verschiedener Einflüsse auf die Signalintensität mit der Folge, daß keine eindeutige Aussage darüber gemacht werden kann, welche Bestandteile der Probe (Matrix oder Einschlüsse) die erhaltene Signalverteilung verursacht haben.

Der Erfindung liegt die Aufgabe zugrunde, eine Standardprobe zum Kalibrieren einer spektrometrischen Analyseeinrichtung zu schaffen, die eindeutige Ergebnisse bezüglich der Verteilung und Größe bestimmter nichtmetallischer Feststoffpartikel in einer metallischen Matrix liefert.

Diese Aufgabe wird erfindungsgemäß mit einer Standardprobe aus einem durch heißisostatisches Pressen von Metallpartikeln und nichtmetallischen Feststoffpartikeln hergestellten Probekörper, in dem das Metall eine Matrix für die nichtmetallischen Feststoffpartikel bildet, gelöst, wobei als Metallpartikel solche aus Reineisen oder einem NE-Metall, gegebenenfalls mit Legierungselementen, und als nichtmetallische Feststoffpartikel solche vorbekannter Zusammensetzung eingesetzt sind.

Bei der erfindungsgemäßen Standardprobe liegen von vornherein Informationen über die Bestandteile der Standardprobe, insbesondere des Typs der Einschlüsse vor. Durch das heißisostatische Pressen werden sie nur in eine für das Messen mit einer spektrometrischen Analyseeinrichtung geeignete Form als Standardprobe gebracht. Mit einem mit erfindungsgemäßen Standardproben kalibrierten Spektrometer lassen sich dann eindeutige Aussagen über die chemische Zusammensetzung, Verteilung und mittlere Größe der nichtmetallischen Feststoffpartikel in einer zu untersuchenden Metallprobe machen.

Solche Aussagen lassen sich um so leichter machen, je besser dafür die Standardprobe präpariert worden ist. So ist von Vorteil, wenn die nichtmetallischen Feststoffpartikel statistisch im Volumen des Probekörpers verteilt sind. Eine solche Verteilung kann bei einer Pulvermischung aus Metallpartikeln und nichtmetallischen Feststoffpartikeln erhalten werden. Insbesondere ist von Vorteil, wenn die Feststoffpartikel in einem vorbekannten definierten Korngrößenband liegen, insbesondere die gleiche Korngröße haben. Ferner ist von Vorteil, wenn die Feststoffpartikel eine vorbekannte Zusammensetzung haben, insbesondere die gleiche Zusammensetzung.

Als vorteilhaft hat sich erwiesen, wenn das volumenbezogene Mischungsverhältnis von Metallpartikeln und nichtmetallischen Feststoffpartikeln zwischen 1 : 100 und 1 : 10000 liegt.

Im folgenden wird die Erfindung anhand einer ein Ablaufdiagramm darstellenden Zeichnung für die Herstellung der Standardprobe näher erläutert.

Nichtmetallische Feststoffpartikel einer bestimmten, bekannten Zusammensetzung (z.B. Al₂O₃; SiO₂; TiO₂; TiN; AlN; MnS; deren Gemische; gemahlene Schlacken und/oder deren Komponenten)in einem breiten Korngrößenband werden fraktioniert, so daß sie in einem oder mehreren definierten Korngrößenbändern vorliegen. Diese Feststoffpartikel bekannten Typs und bekannter Korngröße werden dann mit Metallpartikeln, gegebenenfalls mit Legierungselementen, im Falle von zu untersuchenden Stahlproben, Reineisen vorzugsweise ebenfalls vorbekannter Korngröße gemischt. Die Korngröße der nichtmetallischen Feststoffpartikel und vorzugsweise auch der Metallpartikel sollte gleich oder doch mindestens annähernd gleich sein, weil sich dann leichter eine statistische Mischung herstellen läßt. Das gemischte Pulver wird in einer Stahlkapsel eingeschweißt. Die Stahlkapsel wird evakuiert. Das Pulver wird dann unter einem Preßdruck von beispielsweise 1000 bar bei Temperaturen kurz unterhalb des Schmelzpunktes der Metallpartikel über mehrere Stunden in einer Inertgasatmosphäre behandelt, wie es vom heißisostatischen Pressen (HIP) bekannt ist. Durch diese Behandlung entsteht ein Probekörper, bei dem die Metallpartikel eine komplette Matrix für die darin statistisch verteilten, nichtmetallischen Feststoffpartikel bilden. Nach mechanischer Entfernung der Metallkapsel wird der Probekörper in Standardproben zum Kalibrieren der spektrometrischen Analyseeinrichtung konfektioniert, d.h. daß aus ihm in der Regel Scheiben mit einem Durchmesser von 40 mm und mehreren Zentimetern Dicke geschnitten werden. Für das Kalibrieren werden im allgemeinen mehrere solche Standardproben benötigt, die sich voneinander darin unterscheiden, daß sie von Probe zu Probe jeweils unterschiedliche Typen und Größen von Einschlüssen enthalten.

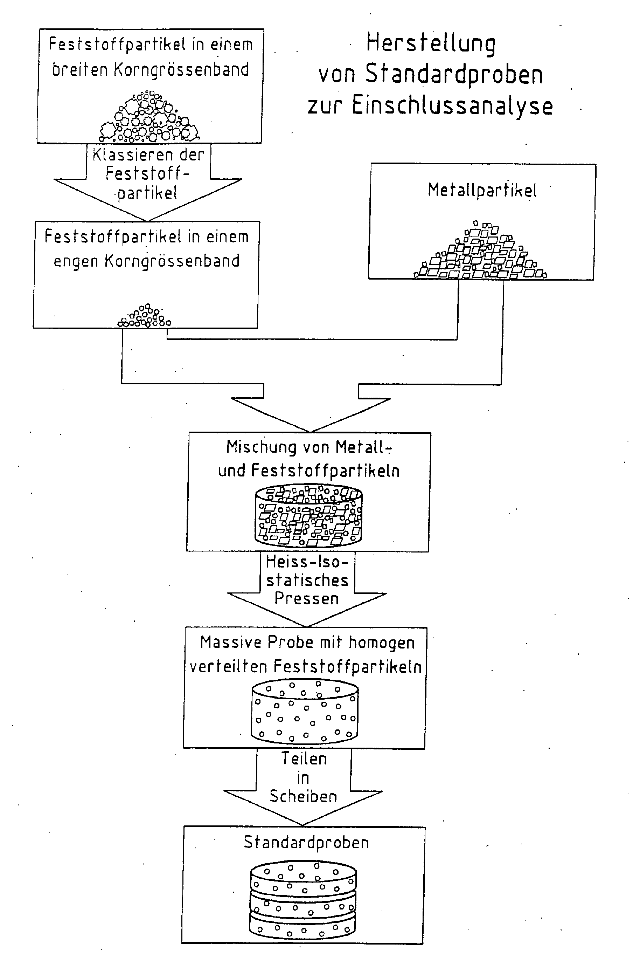

## Patentansprüche

1. Standardprobe zum Kalibrieren einer spektrometrischen Analyseeinrichtung aus einem durch heißisostatisches Pressen von Metallpartikeln und nichtmetallischen Feststoffpartikeln hergestellten Probekörper, in dem das Metall eine Matrix für die nichtmetallischen Feststoffpartikel bildet, wobei als Metallpartikel solche aus Reineisen oder einem NE-Metall, gegebenenfalls mit Legierungselementen, und als nichtmetallische Feststoffpartikel solche vorbekannter Zusammensetzung eingesetzt sind.

2. Standardprobe nach Anspruch 1, **dadurch gekennzeichnet, daß** die nichtmetallischen Feststoffpartikel statistisch im Volumen des Probekörpers verteilt sind.

3. Standardprobe nach Anspruch 1 oder 2, **dadurch gekennzeichnet, daß** die nichtmetallischen Feststoffpartikel in einem vorbekannten definierten Korngrößenband liegen.

4. Standardprobe nach einem der Ansprüche 1 bis 3, **dadurch gekennzeichnet, daß** die nichtmetallischen Feststoffpartikel die gleiche Korngröße haben.

5. Standardprobe nach einem der Ansprüche 1 bis 4, **dadurch gekennzeichnet, daß** die Metallpartikel und die nichtmetallischen Feststoffpartikel die gleiche Korngröße haben.

6. Standardprobe nach einem der Ansprüche 1 bis 5, **dadurch gekennzeichnet, daß** das volumenbezogene Mischungsverhältnis von Metallpartikeln und nichtmetallischen Feststoffpartikeln zwischen 1 : 100 und 1 : 10000 liegt.

7. Standardprobe nach einem der Ansprüche 1 bis 6, **dadurch gekennzeichnet, daß** die nichtmetallischen Feststoffpartikel die gleiche Zusammensetzung haben.

8. Standardprobe nach Anspruch 7, **dadurch gekennzeichnet, daß** die nichtmetallischen Feststoffpartikel Korundpartikel sind.
